# EUROPEAN PATENT SPECIFICATION

(11) **EP 4 019 251 B1**
(45) Date of publication and mention of the grant of the patent: **25.03.2026**
(21) Application number: 20216959.5
(22) Date of filing: 23.12.2020
(51) Int. Cl.: B32B 38/18, B27D 1/08, B27N 5/00, B32B 21/13

(54) **MANUFACTURING METHOD OF A MULTI-LAYER COMPONENT OF LAYERED ELEMENTS**
HERSTELLUNGSVERFAHREN EINER MEHRSCHICHTIGEN KOMPONENTE VON GESCHICHTETEN ELEMENTEN
PROCÉDÉ DE FABRICATION D'UN COMPOSANT MULTICOUCHE D'ÉLÉMENTS EN COUCHES

(43) Date of publication of application: 29.06.2022
(73) Proprietor: Universität Stuttgart, 70174 Stuttgart (DE)
(72) Inventor: Wood, Dylan, 70174 Stuttgart (DE); Menges, Achim, 70174 Stuttgart (DE); Kiesewetter, Laura, 70174 Stuttgart (DE); Rüggeberg, Markus, 8093 Zürich (CH); Grönquist, Philippe, 8093 Zürich (CH); Burgert, Ingo, 8093 Zürich (CH)
(74) Representative: Witte, Weller & Partner Patentanwälte mbB

(56) References cited:
- WO-A1-2019/180006
- US-A1- 2002 176 959
- US-A1- 2006 027 311
- SABINA AOUF RIMA: "Top architecture stories Top architecture stories University of Stuttgart makes Urbach Tower from self-shaping University of Stuttgart makes Urbach Tower from self-shaping wood wood", 3 June 2019 (2019-06-03), XP055809644, Retrieved from the Internet <URL:https://www.dezeen.com/2019/06/03/university-of-stuttgart-urbach-tower-self-shaping-wood/> [retrieved on 20210601]
- GR�NQUIST PHILIPPE ET AL: "Analysis of hygroscopic self-shaping wood at large scale for curved mass timber structures", SCIENCE ADVANCES, vol. 5, no. 9, 1 September 2019 (2019-09-01), pages eaax1311, XP055809555, DOI: 10.1126/sciadv.aax1311

## Description

### TECHNICAL FIELD

The present invention relates to a manufacturing method of a multi-layer component of layered elements.

### BACKGROUND OF THE INVENTION

More or less complex shaped multi-layer components of either isotropic or unisotropic material, like curved wood, metal or plastic parts are interesting for many applications, such as in architecture, for construction of housing and ceilings, for wood construction companies or furniture manufactures.

There are many methods known for producing shaped multi-layered components, for example cold and hot form bending as the most common method used by industry and craftsmen to produce large curved wood parts. Layers or sheets of wood are physically bent onto a negative formwork, screwed and press-laminated together with adhesive.

One of the disadvantages that results from this most common method is that the required formworks are expensive and eventually use more material than used in the parts. Of course, some formworks can be reused but require adjustment and reconfiguration for every new geometry and a good part of the formworks are only used once before being discarded. Another disadvantage of conventional form bending is that the force of bending leaves the part in a stressed state leading to spring back from the formwork and creep over time. Further, the manufacturing process requires formwork and high forces to bend and hold the wood in place for an extended time.

Hence, even though complex and structurally efficient curved geometries are nowadays easily designed, intensive manufacturing and excessive machining is still involved for the conventional manufacturing methods. Another more recent approach which tries to overcome these problems is to use environmentally actuated wood bilayers and wood composite bilayers. Grönquist et al.: "Analysis of hygroscopic self-shaping wood at large scale for curved mass timber structures", Science Advances vol. 5, no. 9 (1 September 2019), XP055809555, proposes an efficient form-giving mechanism for large-scale curved mass timber by using bilayered wood structures capable of self-shaping by moisture content changes. By using time and moisture-dependent mechanical simulations, contributions of different wood-specific deformation mechanisms on the self-shaping of large-scale elements is demonstrated.

Sabina Aouf Rima: "Top architecture stories Top architecture stories University of Stuttgart makes Urbach Tower from self-shaping University of Stuttgart makes Urbach Tower from self-shaping wood wood", 3 June 2019 (2019-06-03), XP055809644, states: University of Stuttgart engineers have harnessed the natural shrinking process of wood as it loses moisture to create this world-first self-twisted tower in Germany. The structure is made using a new, non-energy-intensive process that involves predicting how wood will shrink as it dries out. Based on this technique, the flat timber panels are designed to warp into the desired shape. For the Urbach Tower, they chose a curved shape. They reduced the panels' moisture down to 12 per cent in an industrial drying chamber. After removing them, they overlapped and laminated the pieces to form the 12 larger curved strips that form the building's structure.

In US 2016/0340826 A1, an active self-transformable material is disclosed which comprises a flexible base material with an active material disposed on or within the flexible base material in a specific pattern. More particularly, the active material and the flexible base material differ in properties such that the active material is reactive to an external stimulus trigger that causes an automatic transformation of the active self-transformable material into a predetermined three-dimensional transformed shape. The method is only promising for flexible base materials, where the base material is reacting in a certain way to an external stimulus trigger.

Although this method could in principle be applied to a first and second layer of wood or another isotropic or anisotropic multi-layered component, it would not allow reaching more complex shapes at low costs and less waste. In particular, this method involves breaking down the material to smaller fibers, which is a disadvantage for larger parts, because more processing and additional materials are required to reach the strength of wood. Accordingly, the method as disclosed in US 2016/0340826 A1 is not promising at a scale which is, for example, relevant for the manufacturing of furniture pieces, such as chairs or stools.

The subject matter of the invention disclosed in WO 2019/180006 A1 aims at overcoming these afore-mentioned problems and proposes a more cost-efficient manufacturing method which is more resource-efficient by producing less waste while manufacturing laminated fibre based components for different applications with higher curvatures and more complex shapes in a reproducible way. The change of shape is programmed in the layout and is achieved by changing the moisture content of the laminated fibre based components (e.g., by drying) and afterwards stacking and fixing by lamination a plurality of shape-changed plant-fibre based components to each other in a stacking and fixing step. After the stacking and fixing step, the shape of the resulting shaped laminated multi-layer plant-fibre based construction component is at least to a certain degree dimensionally stable, even in further changed conditions. In other words, the stacking and fixing proposed in WO 2019/180006 A1 brings the final shaped laminated plant-fibre based construction component into a 'locked state' in which it retains its final curved shape even if ambient conditions change to a certain degree.

Even though there are thus already several different approaches of how to manufacture shaped multi-layer construction components, such as self-formed pieces of furniture made of wood, without applying external mechanical forces to create the desired 3D shape, there still remains a need for more cost-efficient and more simplified manufacturing methods.

### SUMMARY OF THE INVENTION

Accordingly, it is an object of the present invention to provide a more cost-efficient and a more simplified manufacturing method that allows manufacturing shaped self-formed multi-layer components that retain their final shape.

The present invention is defined by the independent claim.

Further embodiments are defined in the dependent claims. The below embodiments, examples, and aspects are present for aiding in understanding the background and advantages.

In a first aspect of the present invention a manufacturing method of a multi-layer component of layered elements is presented that comprises the steps of:
- obtaining target climatic condition information of a climatic condition at a target location, the obtained target climatic condition information including information on target relative humidity and/or target temperature at the target location;
- selecting elements for manufacturing the multi-layer component;
- subjecting the selected elements to an initial climatic condition with relative humidity and initial temperature to obtain selected elements having an initial moisture content; and
- bonding of the selected elements having the initial moisture content to obtain the multi-layer component,
wherein, when selecting the elements, one or more of the type, composition, initial moisture content, orientation and/or thickness of the elements is selected based on the obtained target climatic condition information so that the multi-layer component, when it is subjected to the target climatic condition at the target location leading to a target moisture content of the laminated and bonded elements, changes its shape into a shape-changed multi-layer component and substantially retains its changed shape.

Preferred embodiments of the invention are defined in the dependent claims. It shall be understood that the claimed multi-layer component has similar and/or identical preferred embodiments as the claimed method, in particular as defined in the dependent claims and as disclosed herein.

The present invention is based on the idea that a single multi-layer component of layered elements is manufactured such that when it is subjected to target climatic conditions at a target location, it changes its shape into a shape-changed multi-layer component and substantially retains its changed state. Preferably, the layered elements are flat elements which are made from any kind of material that is capable of being manufactured in a layered structure and that changes its shape when a change of ambient climatic conditions occurs.

The following description specifically refers to plant-fibre based materials and composites for the layered elements, for example wood, modified wood (chemically and physically), wood based materials, engineered wood products, wood-plastic composite materials, cellulose composite materials, 3D printed wood fibre or cellulose based materials and structures, but it shall be understood that the present invention is not only relevant for these groups of materials. The present manufacturing method, for example, also works for metals that are well known shape changers with a temperature stimulus. In the case of metal as the raw material, the multi-layer component is preferably much thinner than in case of wood as the raw material. However, bimetallic strips, which convert with a temperature change due to mechanical displacement into shaped strips are known for decades and used, e.g., in conventional thermostats. Further, plastics also have this ability of shape-changing to some extend as their mechanical properties change with heat and moisture. One of these plastic materials may be reinforced hydrogels.

In general, the used layered elements need to be solid and rigid enough to result in the shaped multi-layer component, which can later be used in architecture, for construction of housing and ceilings or for building pieces of furniture. Such layered elements are stable in itself and therefore self-supporting.

For the case of wood as raw material of the layered elements, different wood species can be used and one or more wood species may be used within one layered element. In one case, the wood species can be beech wood, in another case, it can be spruce or maple wood. According to the present invention, the naturally occurring hygroscopic forces in wood, which are often problematic, can be harnessed here and directed to produce designed deformations in multi-layer wood sheets.

The present invention provides a major logistical advantage and a cost-efficient and simplified manufacturing method. This can be explained by comparing the manufacturing method of the present invention and the manufacturing method disclosed in WO 2019/180006 A1.

According to the manufacturing method disclosed in WO 2019/180006 A1, a stacking and fixing (gluing) of many shaped laminated multi-layer components is needed as a single shaped multi-layer component on its own would not be in a stable state when it comes to a change of the final climatic conditions. After the stacking and fixing step, the shape of the resulting stacked shape-changed multi-layer component is dimensionally stable, even in further changed conditions. That means that if the stacked shape-changed multi-layer component is, e.g., a wood-based furniture, it can be placed in the house of a customer and when the climatic conditions change slightly (e.g., by opening a door or a window), the furniture retains its final shape as the stacking and fixing of several layered elements leads to a certain stability.

The present invention, in turn, is directed to a single multi-layer component of layered elements that changes its shape at a target location (such as in the house of a customer) and that substantially retains its changed shape. Hence, no stacking and fixing of many shape-changed components is needed (in contrast to WO 2019/180006 A1) for the stabilization. That also means that a single multi-layer component, such as a flat multi-layer wood-based component, can be manufactured in a factory and shipped or delivered to a customer where the flat multi-layer wood-based component changes its shape in a self-forming process to form a shape-changed multi-layer component, such as a chair. Accordingly, a typical assembly process of furniture pieces is not required.

In other words, a transport company only has to deliver a sealed flat piece of wood to the customer. This is cost-efficient and allows saving space. At the target location, such as in the living room of the customer, the flat piece of wood self-transforms into the final furniture by the self-forming process. The entire product can be produced and shipped flat and then actuated in situ by removing a protective packaging or sealing and exposing the product to the interior air. Thus, a completely different approach is provided according to the present invention as furniture is typically shaped and assembled in factory using machines, hardware or adhesives to connect multiple parts and then shipped in big packages to the user. The present invention is interesting especially for interior parts.

The manufacturing of such a single multi-layer component that self-transforms into a shape-changed multi-layer component at a target location and that substantially retains its changed shape is possible because target climatic conditions of the climatic condition at the target location are obtained at the beginning and one or more of the type, composition, initial moisture content, orientation and/or thickness of the elements for manufacturing the multi-layer component are selected based on the target climatic condition information. That means that if, e.g., the final shape-changed multi-layer component is expected to be placed in the living room of a customer, the type, composition, initial moisture content, orientation and/or thickness of the elements is selected differently than in case where the final shape-changed multi-layer component is expected to be placed in the cellar of the customer where, e.g., the temperature is expected to be lower than in the living room.

In said context, the orientation reflects how the different layered elements are oriented with respect to each other. Further, the orientation is especially important in case the layered elements are made of orthographic or anisotropic materials. The composition reflects, for example, whether the layered elements are made from wood metal, plastic etc. and also how different compositions and sections of material are arranged in-plane for a single layered element, such as that one single layered element is made of wood that comprises several different sections with different initial moisture contents or thicknesses. The single layered elements are typically flat before the self-shaping process and the low height of these flat layered elements is the thickness according to the present invention.

In other words, the self-shaping and retaining in the final state is solved by 'programming' a final geometry into the furniture pieces in the manufacturing process. This can be done by arranging and preparing the elements or materials so that their shape change produces a specific geometry when exposed to an environment different from that of manufacturing. In said context, it shall further be noted that the multi-layer component comprises at least two layered elements, but may also comprise even more layered elements. The bonding of these layered elements preferably occurs at a climatic condition that is outside the range of the target climatic conditions, i.e., outside the range of the target temperature range and outside the range of the target relative humidity. This can also be the initial climatic condition.

It shall be noted that the initial climatic condition as well as the climatic condition at which the bonding of the layer elements occurs shall be different from normal ambient and indoor climatic conditions. This can, for example, be achieved by spraying water onto the layered elements to obtain a high initial moisture content.

Further, it shall be noted that the bonding step may additionally comprise a step of laminating of the layered elements, which in particular are laminated by vacuum lamination. In case of bonding by adhesives, the required pressure during bonding can be applied by either a press machine (for flat parts), by vacuum lamination or by screw clamping.

Further applications of the present invention are mold free production of customized 3D geometries using industry standard materials and flat manufacturing as well as in factory forming and locking. Also hybrid self-forming and adaptive furniture is possible as the parts could be produced with combinations of irreversible and responsive behaviors that continuously adapt to smaller changes in the environment.

According to an embodiment, the shape-changed multi-layer component substantially retains its changed shape at the target climatic condition. Preferably, one or more of the type, composition, initial moisture content, orientation and/or thickness of the elements is selected such that the final shape-changed multi-layer component substantially retains its changed shape at the target climatic condition, e.g., in the living room of the customer with a target temperature of 18-23°C and a target relative humidity of 40-60%.

In said context it shall further be noted that the initial and target climatic conditions do not refer to a fixed condition such as an initial climatic condition with a single initial temperature and a single initial relative humidity. Rather the climatic conditions are ranges, i.e., temperature ranges and relative humidity ranges.

Preferably, one or more of the type, composition, initial moisture content, orientation and/or thickness of the elements is selected such that the final shape-changed multi-layer component even substantially retains its changed shape at a climatic condition which differs from the target climatic condition. This climatic condition can, e.g., occur when the customer opens the window of the living room at a cold day where a lot of cold air enters the living room and leads to a decrease of the temperature below 18°C. Preferably, even in cases where the temperature and relative humidity deviates from the target relative humidity and target temperature less than 30% (such as 12.6°C for the lower limit of 18°C), the shape-changed multi-layer component substantially retains its shape.

Another component is the frequency at which the climatic conditions change at the target location. In case these climatic conditions change with high frequency, the shape-changed multi-layer component tends to substantially retain its shape since a long-term change of the climatic conditions (at least some hours) is needed to retransform the final furniture piece into the original flat state. A change in the climatic conditions for shorter times does not have a notable effect on the shape of the final furniture piece, i.e., the final furniture piece substantially retains its shape. This means that if the final furniture piece is expected to be placed in the living room of a customer with a typical temperature range of 18-23°C, a temperature decrease down to not less than 12.6°C for a rather short time periods of 30 min or even one or two hours does not cause a retransformation of the shape-changed multi-layer component back into the original flat state.

In the context of the present invention, the teaching that the shape-changed multi-layer component shall substantially retain its shape shall be understood such that a user would objectively state that the shape-changed multi-layer component is still in the shape-changed state. As mentioned already above, the shape-changed multi-layer component may, e.g., a piece of furniture, such as a chair or a lounge chair, which is self-formed by a self-forming process from a flat multi-layer component. If the shape of the chair or the lounge chair deviates slightly from the desired shape, a user would objectively conclude that said chair or lounge chair substantially retained its shape as long the user has still the possibility to use the furniture piece properly, i.e., when there is still the possibility to sit on the chair or to lie on the lounge chair. Accordingly, it is also possible to state that the shape-changed multi-layer approximately retained its shape in these cases. However, if the shape of the chair of the lounge deviates so much from the desired shape that a user cannot sit or lie anymore on the furniture piece, this furniture piece is not meant to substantially retain its shape in the context of the present invention. This is especially the case if the piece of furniture transforms back into the initial flat state. Hence, depending on the particular piece of furniture or type of furniture, deviations from the desired final shape in the range up to 20 or 30%, e.g. in the range of 5% or 10% or 20% or even 30%, may still be understood as substantially the same shape. This also holds if only part of the piece of furniture (e.g. the back of a chair) deviates from the desired final shape whereas the rest of the chair (e.g. the seat and the legs) keep the desired final shape.

According to an embodiment, the bonding step is done in-plane or out-of-plane of the selected elements to obtain the multi-layer component being either an in-plane multi-layer component or an out-of-plane multi-layer component. The selected elements are, e.g., mono-layers extending, e.g., in x-y plane, which are either connected by an adhesive in z-direction (out-of-plane) of a Cartesian coordinate system or in x or y-direction (in-plane) of the Cartesian coordinate system to obtain the multi-layer component. For the example of wood plates, this is achieved by constructing flat wood bilayers with one layer (i.e., one selected element) acting as a restrictive layer glued to another layer acting as an actuating layer. The active layer can be prepared with a very high wood moisture content so that when the multi-layer component is opened in a dry interior environment the active layer will slowly dry-shrink, which causes the multi-layer component to change its shape. The passive layer gives more stability to the bilayer. Further, how the different layer elements are rotated along their x, y and z-coordinates has an impact and anisotropic materials can be designed by combining multiple elements or sections to obtain one single element.

Preferably, in the selecting step, one or more of the type, composition, initial moisture content, orientation and/or thickness of the elements is selected based on the target temperature and/or based on the target relative humidity. It might be an option to only consider the target temperature or the target relative humidity. That means, for example, that different types of material, such as different types of wood, are selected based on whether the final shape-changed multi-layer component is expected to be placed at a warm or cold place. For example, the selected elements may be made of maple wood and the target relative humidity may be 40-60% which corresponds to a target moisture content of 10-14% in the equilibrium for said maple wood. For the shape change, it may be necessary to ensure that the flat state of the layered elements is created above the target moisture content which may be the case for an initial moisture content of 25%, for example. For many wood species, even if the initial relative humidity is 95%, it is difficult to raise the initial moisture content above 25%, so going above this initial moisture content can be achieved by adding spray or water that ensures that the final shape-changed multi-layer component, such as the final shape-changed furniture, does not return to the flat state due to changes of the target climatic conditions at the target location.

The target relative humidity and/or the target temperature may be measured by any technique known in the art, such as by conventional thermometers and/or hygrometers.

In case the thickness of the elements is selected based on the target relative humidity and/or based on the target temperature, preferably the smaller the target relative humidity and/or the higher the target temperature, the thicker the selected elements is. Thick elements typically need a longer time and more input stimulus in form of a temperature change or in form of a change of the relative humidity in order to change its shape. If the target temperature is high, the selected elements may be thicker as a large temperature change causes a drastic reduction in the moisture content and thus the shaping and bending of the multi-layer component. If the target relative humidity is small, the selected elements may also be thicker as a small target relative humidity also causes a more drastic reduction of the moisture content of the layer elements which, in turn, leads to a shaping and bending of the multi-layer component.

In case the initial moisture content of the elements is selected based on the target relative humidity and/or based on the target temperature, preferably the smaller the target relative humidity and/or the higher the target temperature, the higher the initial moisture content of the selected elements is. Again, a high target temperature leads to a drastic reduction in the moisture content. Accordingly, the initial moisture content can be high, such as 25-30%, to end up with a target moisture content, such as 10-14%, whereas the initial moisture content should be lower, such as 18-20%, if the target temperature is lower in order end up with the desired target moisture content of 10-14%. Generally, it is desired to reduce the amount of change in moisture content (e.g. wood moisture content) that is required for a specific change in shape to reduce the stress that builds up between the layers.

In an embodiment, the method further comprises, following the bonding, self-forming of the multi-layer component at the target location to obtain the shape-changed multi-layer component. A change of input stimulus at the target location in form of a change of ambient climatic conditions changing from the initial climatic condition with initial relative humidity and initial temperature to the target climatic condition with target relative humidity and target temperature at the target location leads to the target moisture content of the laminated and bonded elements to obtain the shape-changed multi-layer component. This self-forming step of the multi-layer component may be achieved by bringing the multi-layer component from an initial location to the target location. The initial location may, for example, be a factory site where the elements for manufacturing the multi-layer component are selected, laminated and bonded. The target location may, for example, be a customer site where the final shape-changed multi-layer component is expected to be placed. The moisture content change at the final site leads to the shaping and forming of the flat multi-layer component into the shape-changed multi-layer component.

According to an embodiment, at least two elements are joined during the bonding at initial relative humidity and initial temperature together out of plane in a z-direction of a Cartesian coordinate system, to obtain an out-of-plane multi-layer component, before the self-forming is carried out while change of ambient climatic conditions, resulting in a shape-changed out-of-plane multi-layer component. Alternatively or, at least two elements are joined during the bonding at initial relative humidity and initial temperature together in plane in a x, y-direction of a Cartesian coordinate system, to obtain an in-plane multi-layer component, before the self-forming is carried out while change of ambient climatic conditions, resulting in a shape-changed in-plane multi-layer component.

According to an embodiment, the shape-changed multi-layer component is manufactured from initial flat formed wood based elements or flat formed multi-element laminated wood based components, which are deformed through the self-forming while changing the ambient climatic conditions from initial climatic condition to target climatic condition.

The change of the climatic conditions may comprise a change between 5% and 60% for the relative humidity and/or a change between 10°C and 70°C for the temperature to cause the self-forming of the multi-layer component. Typically, the initial temperature T1 is lower than the target temperature T2 and the initial relative humidity RH1 is higher than the target relative humidity RH2. Accordingly, the multi-layer component will slowly dry and shrink at the target location, which causes the multi-layer component to change its shape into a shape-changed multi-layer component. In practical implementations a minimum relative humidity may be in the range of 5-10% and the relative humidity may be up to 30% or even up to 60%. These values may be used as changes of the wood moisture content. Theoretically, even a change value of 1% may be used since there will be a small shape change even at such a low value. More realistic are change values in the range of at 5-10%. These values relate to the oven drying. In absolute terms the relative humidity may be in the range of 100% - 40% and the moisture content may be in the range of 30% -12%. Using the moisture content takes into account the factor of time and absorption rate which may be useful in this case. The moisture content does not correlate directly to the relative humidity at a specific time, but only with a long delay.

Further advantageous embodiments are defined below. It shall be understood that the features mentioned above and the features still to be explained below can be used not only in the combination indicated, but also in other combinations or on their own, without leaving the scope of the present invention.

### BRIEF DESCRIPTION OF THE DRAWINGS

These and other aspects of the invention will be apparent from and elucidated with reference to the embodiments described hereinafter. In the following drawings:
Fig. 1 shows a flowchart, which illustrates a manufacturing method of a multi-layer component of layered elements according to the present invention;
Fig. 2 shows a scheme of a manufacturing method of a shape-changed multi-layer component according to the present invention with a self-forming step;
Fig. 3 shows a schematic diagram of plant-fibre based multi-layer components manufactured according to the present invention which comprise at least two elements with indicated fibre orientation and which deform into shape-changed multi-layer components by bending, twisting and twisting helices;
Fig. 4 shows photographs of a prototype of a multi-layer component manufactured according to the present invention which deforms over time into a shape-changed multi-layer component (lounge chair);
Fig. 5 shows a schematic diagram, which illustrates an overview over the self-forming process of a multi-layer component manufactured according to the present invention into a shape-changed multi-layer component forming a lounge chair;
Fig. 6 shows another schematic diagram, which illustrates an overview over the self-forming process of two multi-layer components manufactured according to the present invention into shape-changed multi-layer components forming a chair;
Fig. 7 shows another schematic diagram, which illustrates the various steps of the self-forming process of the chair shown in Fig. 6;
Fig. 8 shows another schematic diagram which illustrates an overview over the self-forming process of a multi-layer component manufactured according to the present invention into shape-changed multi-layer components forming a stool; and
Fig. 9 shows further photographs of prototypes of multi-layer components manufactured according to the present invention, which deform into shape-changed multi-layer components forming different wood-based furniture.

### DETAILED DESCRIPTION OF THE DRAWINGS

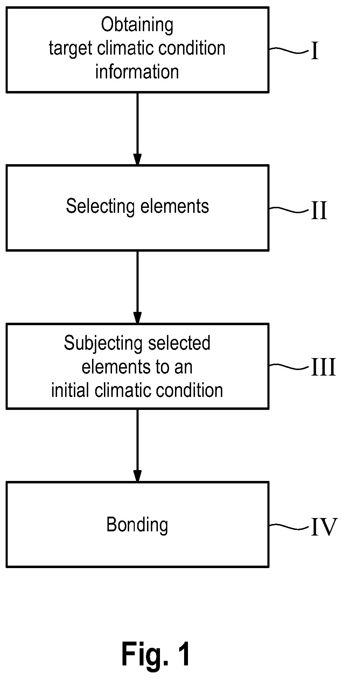

Fig. 1 shows a flowchart, which illustrates a manufacturing method of a multi-layer component of layered elements according to the present invention. In a first step I, target climatic condition information of a climatic condition at a target location is obtained. This target climatic condition information includes information on target relative humidity and/or target temperature at the target location, which may, e.g., be the living room of a customer.

In step II, elements for manufacturing the multi-layer component according to the present invention are selected.

In the next step III, the selected elements are subjected to an initial climatic condition with initial relative humidity and initial temperature to obtain selected elements having an initial moisture content.

In the last step IV, the selected elements, which have the initial moisture content, are bonded to obtain a multi-layer component. Optionally, a laminating step of the selected elements is applied before or in the bonding step.

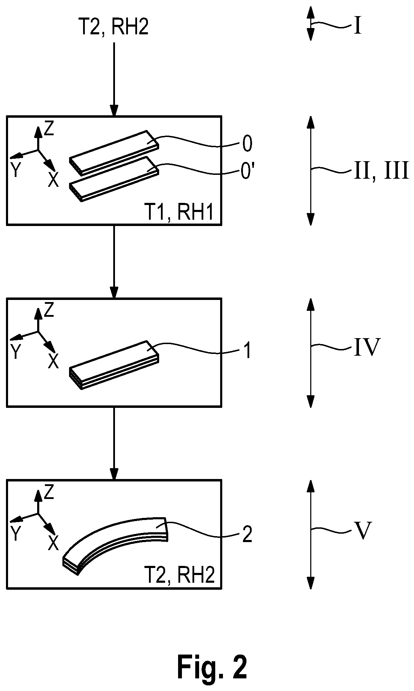

When selecting the elements in step II, one or more of the type, composition, initial moisture content, orientation and/or thickness of the elements is selected based on the target climatic condition information so that the multi-layer component, when it is subjected to the target climatic condition at the target location leading to a target moisture content of the laminated and bonded elements, changes its shape into a shape-changed multi-layer component and substantially retains its changed shape. This is explained in more detail with reference to subsequent Figs. 2-8.

Fig. 2 shows a scheme of a manufacturing method of a shape-changed multi-layer component according to the present invention with a self-forming step V. As already explained with reference to Fig. 1, the first step I is to obtain target climatic condition information of a climatic condition at a target location. This target location may, for example, be the living room of a customer where the final shape-changed multi-layer component is expected to be placed. The climatic condition information includes information on the target relative humidity RH2 and/or target temperature T2 at the target location and may be measured with a conventional hygrometer or a thermometer. In said case, where the target location is the living room of a customer, the initial climatic condition information may, e.g., include a target temperature T2 between 18-23°C and a target relative humidity RH2 of 40-60%.

In the following steps II, III, elements 0, 0' for manufacturing the multi-layer component are selected and subjected to an initial climatic condition with relative humidity RH1 and initial temperature T1 to obtain selected elements having an initial moisture content. Exemplarily, two selected elements are shown in Fig. 2. These elements 0, 0' may, e.g., be flat plant-fibre based elements that are cut out from raw material, such as wood.

In step IV, the selected elements 0, 0' having the initial moisture content are (optionally laminated and) bonded together. It is exemplarily shown in Fig. 2 that the bonding step IV is done out-of-plane (i.e., in z-direction of the illustrated Cartesian coordinate system) to obtain the multi-layer component 1 which is exemplarily a bilayer in Fig. 2. Another possibility is to perform the bonding step IV in-plane (i.e., in x, y-direction; not shown). Preferably, the bonding step IV occurs at a climatic condition that is outside the range of the target climatic conditions, i.e., outside the range of the target temperature range T2 and outside the range of the target relative humidity RH2. This can also be the initial climatic condition with the initial temperature T1 and the initial relative humidity RH1. Preferably, the climatic conditions at which the bonding step is performed are such that the multi-layer component retains its flat shape during the bonding.

The method according to the present invention may, as shown in Fig. 2, further comprise a self-forming step V, in which a change of input stimulus in form of a change of ambient climatic conditions changing from the initial climatic condition with initial relative humidity RH1 and initial temperature T1 at an initial location to the target climatic condition with target relative humidity RH2 and target temperature T2 at the target location is carried out to obtain a shape-changed multi-layer component 2. This change in shape is caused by a change in the moisture content of the bonded elements from the initial moisture content (at T1 and RH1) to the target moisture content (at T2 and RH2). Preferably, the target temperature T2 is larger than the initial temperature T1 and the target relative humidity RH2 is smaller than the initial relative humidity RH1.

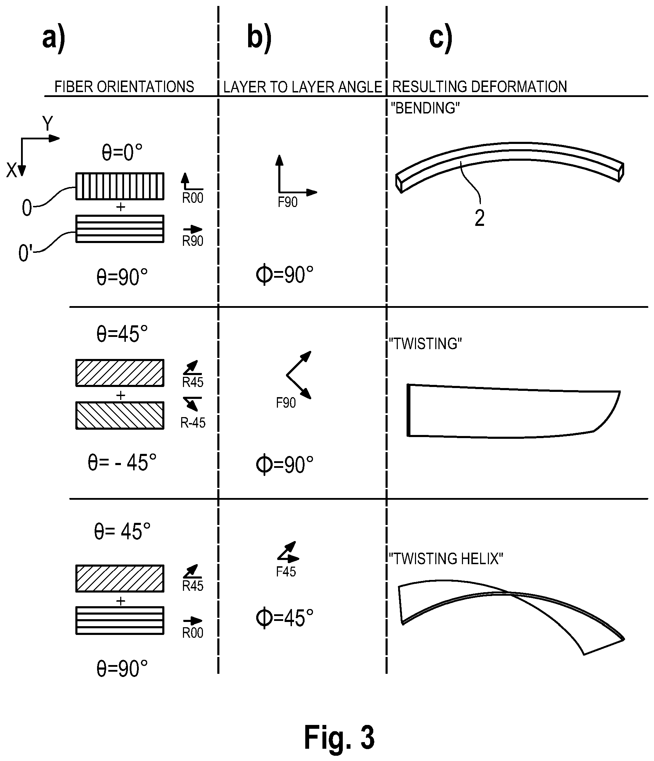

Fig. 3 shows a schematic diagram of plant-fibre based multi-layer components manufactured according to the present invention which comprise at least two elements with indicated fibre orientation and which deform into shape-changed multi-layer components 2 by bending, twisting and twisting helices. Multi-layer configurations comprising at least two cut plant-fibre based elements 0, 0' with indicated fibre orientation in each layer (rotation angle Θ) are shown in a), the fibre angles Φ between each of the plane-fibre based elements are shown in b) and the resulting deformation of the final shape-changed multi-layer components 2 is shown in c).

The differential orientation of the material in the two layered elements 0, 0' defined by the fibre angle Θ can be in the range of a few degree up to 90°. The orientation of the material with respect to the illustrated x-y-coordinate system defined by the rotation angle Φ can be in the range from 0° to 180°. In case of Θ=90° and Φ=0° or 90°, pure bending is achieved (cf. first row in Fig. 3), whereas for Θ=90° and Φ=45° or -45° pure twist is achieved. Other combinations lead to combined twisting and bending, as depicted in the third row in Fig. 3. Hence, different orientations of the layered elements 0, 0' can result in completely different shapes of the final shape-changed multi-layer component 2.

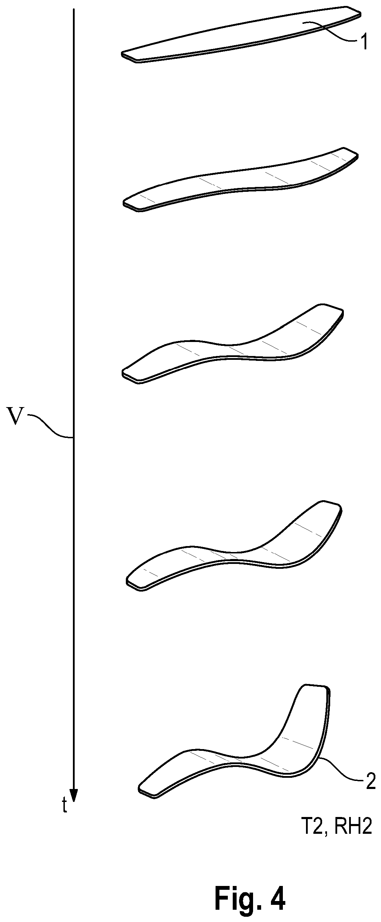

Fig. 4 shows photographs of a prototype of a multi-layer component 1 manufactured according to the present invention which deforms over time t into a shape-changed multi-layer component 2. Exemplarily, the shape-changed multi-layer component 2 is a lounge chair in Fig. 4. The self-forming V typically needs at least several minutes up to several hours, sometimes even some days and depends strongly on the overall thickness, type of material and composition of the multi-layer component 1.

The self-forming V as shown in Fig. 4 may, e.g., occur in the living room of a customer. Self-forming means that the components take their final form at the target location without digital instructions, machines, or labor. A flat multi-layer component 1 is delivered to the customer at climatic conditions at which the multi-layer component 1 remains in a flat state. Subsequently, the different target climatic conditions with target temperature T2 and target relative humidity RH2 in the living room induce the self-forming process which causes the transformation of the flat multi-layer component 1 into the shape-changed multi-layer component 2 (i.e., the final lounge chair). Preferably, the target temperature T2 is larger than the temperature at which the flat multi-layer component 1 is delivered. Further, the target relative humidity RH2 is preferably lower than the relative humidity at which the flat multi-layer component 1 is delivered. Accordingly, the increase in temperature and the reduction in relative humidity at the target location induces a dry-shrinking which causes the multi-layer component to change its shape.

The multi-layer component 1 is manufactured and delivered to the customer at climatic conditions which are very different from that of the target climatic conditions T2, RH2. The final shape-changed multi-layer component 2 thus stays in the second geometric configuration, i.e., in the shape-changed configuration, and is dimensionally and form stable unless the shape-changed multi-layer component 2 is exposed again for an extended amount of time (typically several hours) to the climatic conditions of manufacturing and delivery. Typically, even if the climatic conditions change by opening, e.g., the window of the living room at a cold winter day, the shape-changed multi-layer component 2 remains in the final shape as the climatic conditions at the target location do not reach anymore the climatic conditions of manufacturing and delivery.

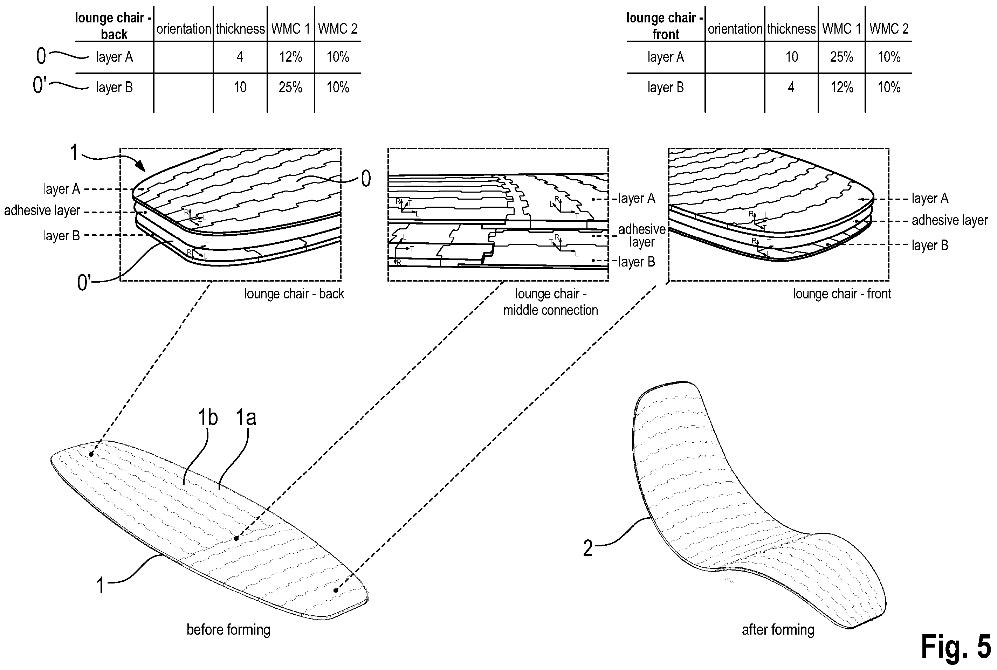

Fig. 5 shows a schematic diagram which illustrates an overview over the self-forming process of a multi-layer component 1 manufactured according to the present invention into a shape-changed multi-layer component 2 (lounge chair). Three different insets in Fig. 5 show the back, middle connection and front of the lounge chair. As illustrated in these three insets, the multi-layer component 1 at least comprises two layered elements 0, 0' (layer A and layer B) which are bonded together by an adhesive layer in Fig. 5. Further, it becomes apparent from Fig. 5 that one layered element 0, 0' may be formed from several different sections 1a, 1b. These different sections 1a, 1b may, for example, be made from different types of wood, different thicknesses or that may comprise different initial moisture contents that allow a shaping of the multi-layer component 1 into any arbitrary shape, such as the S-like shape of the lounge chair shown in Fig. 5. In general, the final form can be customized via manipulations (thickness, initial moisture content, orientation of the single layers, etc.) in the flat layout during the manufacturing process.

Exemplarily, the left table in Fig. 5 shows that the back of the lounge chair may comprise two layers A, B with (exemplary and non-limiting) thicknesses of 4 mm and 10 mm and initial moisture contents of 12% and 25% and that these initial moisture contents reduce into target moisture contents of 10% at the target location. The right table in Fig. 5 shows that the front of the lounge chair may comprise two layers A, B with thicknesses of 10 mm and 4 mm and initial moisture contents of 25% and 12% (i.e., exactly opposite to the thicknesses and initial moisture contents at the back of the lounge chair) and that these initial moisture contents reduce into target moisture contents of 10% at the target location. The opposite modification of the front and the back of the lounge chair leads to the S-like shape with opposite curvatures.

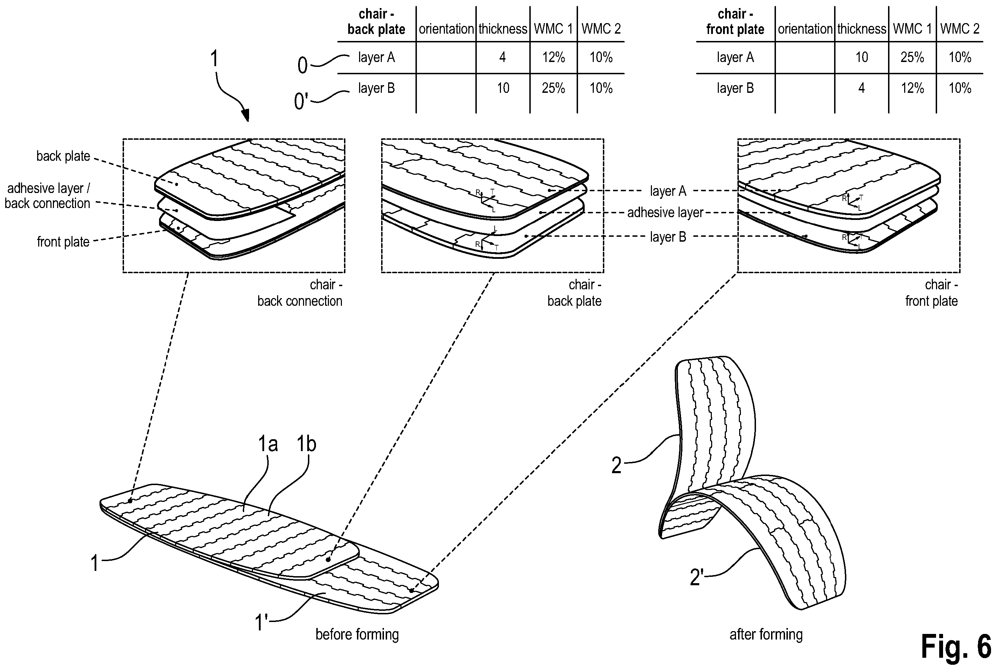

Fig. 6 shows another schematic diagram, which illustrates an overview over the self-forming process of two multi-layer components 1, 1' according to the present invention into shape-changed multi-layer components 2, 2' forming a chair. As illustrated in Fig. 6, two or more even more multi-layer components 1, 1' may be connected in order to obtain a furniture piece (chair) that comprises two or more shape-changed multi-layer components 2, 2'. Again, the insets show the back, middle connection and front of the chair.

Exemplarily, the left table in Fig. 6 shows that the back of the chair may comprise two layers A, B with thicknesses of 4 mm and 10 mm and initial moisture contents of 12% and 25% and that these initial moisture contents reduce into target moisture contents of 10% at the target location. The right table in Fig. 6 shows that the front of the chair may comprise two layers A, B with thicknesses of 10 mm and 4 mm and initial moisture contents of 25% and 12% (i.e., exactly opposite to the thicknesses and initial moisture contents at the back of the lounge chair) and that these initial moisture contents reduce into target moisture contents of 10% at the target location.

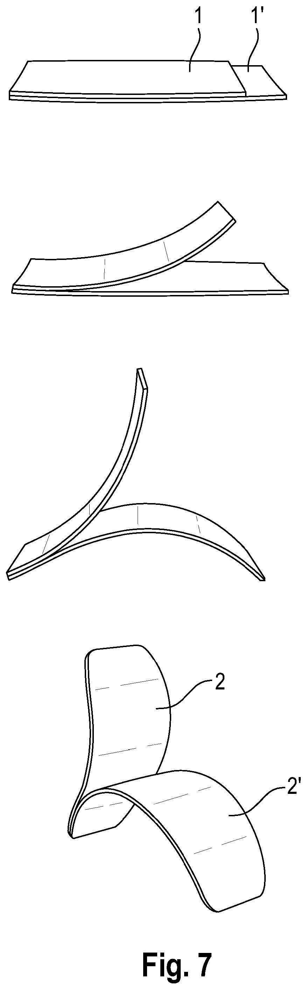

Fig. 7 illustrates the various steps of the self-forming process of the chair shown in Fig. 6.

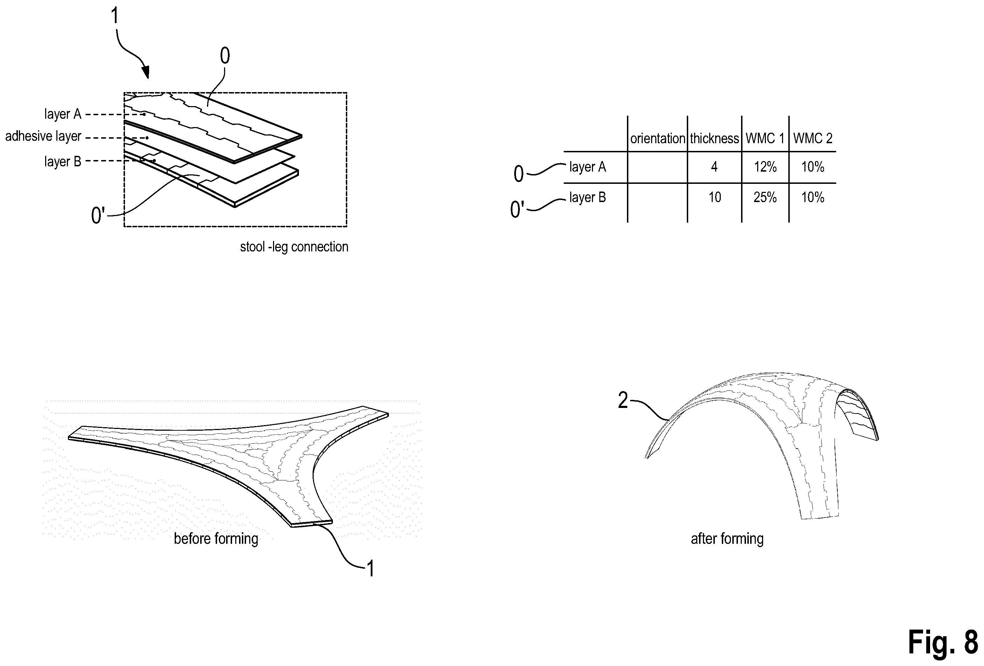

Fig. 8 shows another schematic diagram, which illustrates an overview over the self-forming process of a multi-layer component 1 manufactured according to the present invention into shape-changed multi-layer components 2 forming a stool with three legs. The inset shows the stool-leg connection.

Exemplarily, the table in Fig. 8 shows that the stool may comprise two layers A, B with thicknesses of 4 mm and 10 mm and initial moisture contents of 12% and 25% and that these initial moisture contents reduce into target moisture contents of 10% at the target location.

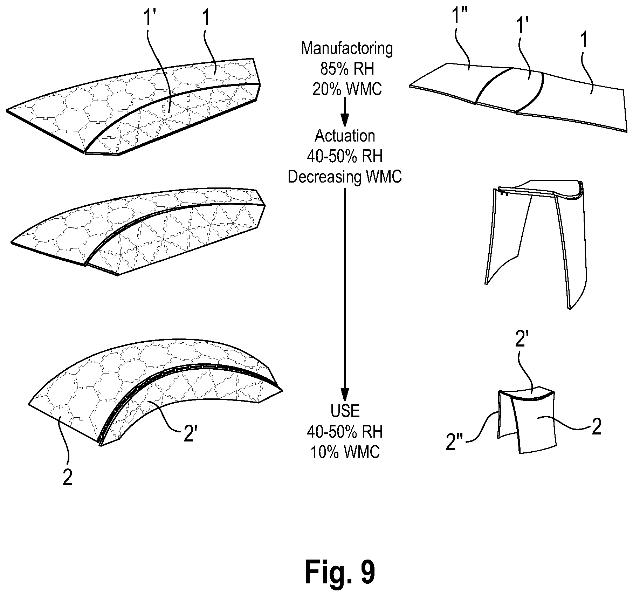

Fig. 9 shows further photographs of prototypes of multi-layer components 1, 1', 1" manufactured according to the present invention, which deform into shape-changed multi-layer components 2, 2', 2" forming different wood-based furniture. As indicated by the arrow in the middle column of Fig. 9, the flat multi-layer components 1, 1', 1" are first exposed to an initial relative humidity of 85%, which results in an initial moisture content of 20% of the flat multi-layer components. Subsequently, a decrease of the relative humidity down to 40-50% reduces the moisture content of the multi-layer components continuously and the dry-shrinking process leads to a shape-changing of the multi-layer components 1, 1', 1" into shape-changed multi-layer components 2, 2', 2".

The curved folding arch geometry shown on the left of Fig. 9 is made from maple wood and spruce wood. The curved folding stool prototype shown on the right of Fig. 9 is made from maple wood and approximately 70 cm high.

A manufacturing system may be used for manufacturing of a multi-layer component of layered elements. The system comprises system components configured to carry out the steps of the manufacturing method as disclosed herein. These system components may e.g. comprise a data interface or user interface for obtaining target climatic condition information, a processor for selected elements, an oven or humidifier for subjecting the selected elements to an initial climatic condition, and a bonding device for bonding of the selected elements. Such system components are generally known as such and may be configured accordingly to process the disclosed method.

While the invention has been illustrated and described in detail in the drawings and foregoing description, such illustration and description are to be considered illustrative or exemplary and not restrictive; the invention is not limited to the disclosed embodiments. The present invention is especially not limited to the geometries shown in the drawings. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Further, any reference signs in the claims should not be construed as limited the scope.

## Claims

1. Manufacturing method of a multi-layer component (1) of layered elements (0, 0'), comprising:
- obtaining (I) target climatic condition information of a climatic condition at a target location at a customer's site, the obtained target climatic condition information including information on target relative humidity (RH2) and/or target temperature (T2) at the target location;
- selecting (II) elements (0, 0') for manufacturing the multi-layer component (1);
- subjecting (III) the selected elements (0, 0') at an initial location to an initial climatic condition with initial relative humidity (RH1) and initial temperature (T1) to obtain selected elements (0, 0') having an initial moisture content, the initial location being different from the target location and the initial climatic condition being different from the target climatic condition; and
- bonding (IV) of the selected elements (0, 0') having the initial moisture content to obtain the multi-layer component (1),
wherein, when selecting the elements (0, 0'), one or more of the type, composition, initial moisture content, orientation and/or thickness of the elements (0, 0') is selected based on the obtained target climatic condition information so that the multi-layer component (1) of the bonded elements (0,0'), when it is subjected to the target climatic condition at the target location leading to a target moisture content of the bonded elements (0,0') being different from the initial moisture content, changes its shape into a shape-changed multi-layer component (2) having a desired final shape and substantially retains its desired final shape at the target climatic condition.

2. Manufacturing method according to claim 1, wherein the shape-changed multi-layer component further substantially retains its changed shape at a climatic condition, which differs from the target climatic condition.

3. Manufacturing method according to any one of the preceding claims, wherein the bonding step (IV) is done in-plane or out-of-plane of the selected elements (0, 0') to obtain the multi-layer component (1) being either an in-plane multi-layer component or an out-of-plane multi-layer component.

4. Manufacturing method according to any one of the preceding claims, wherein one or more of the type, composition, initial moisture content and/or thickness of the elements (0, 0') is selected based on the target temperature (T2) and/or based on the target relative humidity (RH2).

5. Manufacturing method according to claim 4, wherein the target relative humidity (RH2) and/or the target temperature (T2) are measured or estimated to obtain the target climatic condition information for selecting one or more of the type, composition, initial moisture content, orientation and/or thickness of the elements (0, 0') based on the target temperature (T2) and/or based on the target relative humidity (RH2).

6. Manufacturing method according to any one of claims 4 or 5, wherein in case the thickness of the elements (0, 0') is selected based on the target relative humidity (RH2) and/or based on the target temperature (T2), the smaller the target relative humidity (RH2) and/or the higher the target temperature (T2), the thicker the selected elements (0, 0') is.

7. Manufacturing method according to any one of claims 4-6, wherein in case the initial moisture content of the elements (0, 0') is selected based on the target relative humidity (RH2) and/or based on the target temperature (T2), the smaller the target relative humidity (RH2) and/or the higher the target temperature (T2), the higher the initial moisture content of the selected elements (0, 0') is.

8. Manufacturing method according to any one of the preceding claims, further comprising, following the bonding (IV), self-forming (V) of the multi-layer component (1) at the target location, wherein a change of input stimulus in form of a change of ambient climatic conditions changing from the initial climatic condition with initial relative humidity (RH1) and initial temperature (T1) at an initial location to the target climatic condition with target relative humidity (RH2) and target temperature (T2) at the target location, said target climatic condition leading to the target moisture content of the bonded elements (0,0'), is carried out to obtain the shape-changed multi-layer component (2).

9. Manufacturing method according to claim 8, wherein the input stimulus in form of a change of ambient climatic conditions during the self-forming (V) is applied by bringing the multi-layer component (1) before the self-forming (V) from the initial location with initial climatic condition (T1, RH1) to the target location with target climatic condition (T2, RH2).

10. Manufacturing method according to any one of claims 8 or 9,
wherein at least two elements (0, 0') are joined during the bonding (IV) at initial relative humidity (RH1) and initial temperature (T1) together out of plane in a z-direction of a Cartesian coordinate system, to obtain an out-of-plane multi-layer component (1), before the self-forming (V) is carried out while change of ambient climatic conditions, resulting in a shape-changed out-of-plane multi-layer component (2), or
wherein at least two elements (0, 0') are joined during the bonding (IV) at initial relative humidity (RH1) and initial temperature (T1) together in plane in a x, y-direction of a Cartesian coordinate system, to obtain an in-plane multi-layer component (1), before the self-forming (V) is carried out while change of ambient climatic conditions, resulting in a shape-changed in-plane multi-layer component (2).

11. Manufacturing method according to any one of claims 8-10, wherein the shape-changed multi-layer component (2) is manufactured from initial flat formed wood based elements or flat formed multi-element laminated wood based components, which are deformed through the self-forming (V) while changing the ambient climatic conditions from initial climatic condition (TI, RH1) to target climatic condition (T2, RH2).

12. Manufacturing method according to any one of claims 8-11, wherein in the self-forming step (V) a relative humidity change between 5% and 60% and/or a temperature change between 10°C and 70°C from the initial climatic condition to the target climatic condition is carried out.

## Patentansprüche

1. Herstellungsverfahren einer mehrschichtigen Komponente (1) aus geschichteten Elementen (0, 0'), umfassend:
- Erhalten (I) von Zielklimabedingungsinformationen einer Klimabedingung an einem Zielort beim Kunden, wobei die erhaltenen Zielklimabedingungsinformationen Informationen über die relative Zielfeuchtigkeit (RH2) und/oder die Zieltemperatur (T2) am Zielort umfassen;
- Auswählen (II) von Elementen (0, 0') zur Herstellung der mehrschichtigen Komponente (1);
- Unterziehen (III) der ausgewählten Elemente (0, 0') an einem Ausgangsort einer Ausgangsklimabedingung mit anfänglicher relativer Feuchtigkeit (RH1) und anfänglicher Temperatur (T1), um ausgewählte Elemente (0, 0') mit einem anfänglichen Feuchtigkeitsgehalt zu erhalten, wobei der Ausgangsort sich vom Zielort unterscheidet und die Ausgangsklimabedingung sich von der Zielklimabedingung unterscheidet; und
- Verbinden (IV) der ausgewählten Elemente (0, 0') mit dem anfänglichen Feuchtigkeitsgehalt, um die mehrschichtige Komponente (1) zu erhalten,
wobei bei der Auswahl der Elemente (0, 0') eine oder mehrere der Art, Zusammensetzung, des anfänglichen Feuchtigkeitsgehalts, der Ausrichtung und/oder der Dicke der Elemente (0, 0') basierend auf den erhaltenen Zielklimabedingungsinformationen ausgewählt werden, so dass die mehrschichtige Komponente (1) der verbundenen Elemente (0,0'), wenn es der Zielklimabedingung am Zielort ausgesetzt wird, was zu einem Zielfeuchtigkeitsgehalt der verbundenen Elemente (0,0') führt, der sich vom anfänglichen Feuchtigkeitsgehalt unterscheidet, seine Form in eine formveränderte mehrschichtige Komponente (2) mit einer gewünschten Endform ändert und seine gewünschte Endform bei der Zielklimabedingung im Wesentlichen beibehält.

2. Herstellungsverfahren nach Anspruch 1, wobei die formveränderte mehrschichtige Komponente ihre geänderte Form bei einer Klimabedingung, die sich von der Zielklimabedingung unterscheidet, weiterhin im Wesentlichen beibehält.

3. Herstellungsverfahren nach einem der vorhergehenden Ansprüche, wobei der Verbindungsschritt (IV) in der Ebene oder außerhalb der Ebene der ausgewählten Elemente (0, 0') durchgeführt wird, um die mehrschichtige Komponente (1) zu erhalten, die entweder eine in der Ebene liegende mehrschichtige Komponente oder eine außerhalb der Ebene liegende mehrschichtige Komponente ist.

4. Herstellungsverfahren nach einem der vorhergehenden Ansprüche, wobei eine oder mehrere der Art, Zusammensetzung, des anfänglichen Feuchtigkeitsgehalts und/oder der Dicke der Elemente (0, 0') basierend auf der Zieltemperatur (T2) und/oder basierend auf der relativen Zielfeuchtigkeit (RH2) ausgewählt werden.

5. Herstellungsverfahren nach Anspruch 4, wobei die relative Zielfeuchtigkeit (RH2) und/oder die Zieltemperatur (T2) gemessen oder geschätzt werden, um die Zielklimabedingungsinformationen zum Auswählen einer oder mehrerer der Art, Zusammensetzung, des anfänglichen Feuchtigkeitsgehalts, der Ausrichtung und/oder der Dicke der Elemente (0, 0') basierend auf der Zieltemperatur (T2) und/oder basierend auf der relativen Zielfeuchtigkeit (RH2) zu erhalten.

6. Herstellungsverfahren nach einem der Ansprüche 4 oder 5, wobei, falls die Dicke der Elemente (0, 0') basierend auf der relativen Zielfeuchtigkeit (RH2) und/oder basierend auf der Zieltemperatur (T2) ausgewählt wird, je kleiner die relative Zielfeuchtigkeit (RH2) und/oder je höher die Zieltemperatur (T2) ist, desto dicker die ausgewählten Elemente (0, 0') sind.

7. Herstellungsverfahren nach einem der Ansprüche 4-6, wobei, falls der anfängliche Feuchtigkeitsgehalt der Elemente (0, 0') basierend auf der relativen Zielfeuchtigkeit (RH2) und/oder basierend auf der Zieltemperatur (T2) ausgewählt wird, je kleiner die relative Zielfeuchtigkeit (RH2) und/oder je höher die Zieltemperatur (T2) ist, desto höher der anfängliche Feuchtigkeitsgehalt der ausgewählten Elemente (0, 0') ist.

8. Herstellungsverfahren nach einem der vorhergehenden Ansprüche, ferner umfassend, im Anschluss an das Verbinden (IV), eine Selbstformung (V) der mehrschichtigen Komponente (1) am Zielort, wobei eine Änderung eines Eingangsstimulus in Form einer Änderung der umgebenden Klimabedingungen von der Ausgangsklimabedingung mit anfänglicher relativer Feuchtigkeit (RH1) und anfänglicher Temperatur (T1) an einem Ausgangsort zu der Zielklimabedingung mit relativer Zielfeuchtigkeit (RH2) und Zieltemperatur (T2) am Zielort, die zu dem Zielfeuchtigkeitsgehalt der verbundenen Elemente (0,0') führt, durchgeführt wird, um die formveränderte mehrschichtige Komponente (2) zu erhalten.

9. Herstellungsverfahren nach Anspruch 8, wobei der Eingangsstimulus in Form einer Änderung der umgebenden Klimabedingungen während der Selbstformung (V) dadurch angewendet wird, dass die mehrschichtige Komponente (1) vor der Selbstformung (V) vom Ausgangsort mit der Ausgangsklimabedingung (T1, RH1) zum Zielort mit der Zielklimabedingung (T2, RH2) gebracht wird.

10. Herstellungsverfahren nach einem der Ansprüche 8 oder 9,
wobei mindestens zwei Elemente (0, 0') während des Verbindens (IV) bei anfänglicher relativer Feuchtigkeit (RH1) und anfänglicher Temperatur (T1) gemeinsam außerhalb der Ebene in einer z-Richtung eines kartesischen Koordinatensystems gefügt werden, um eine außerhalb der Ebene liegende mehrschichtige Komponente (1) zu erhalten, bevor die Selbstformung (V) während einer Änderung der umgebenden Klimabedingungen durchgeführt wird, was zu einer formveränderten, außerhalb der Ebene liegenden mehrschichtigen Komponente (2) führt, oder
wobei mindestens zwei Elemente (0, 0') während des Verbindens (IV) bei anfänglicher relativer Feuchtigkeit (RH1) und anfänglicher Temperatur (T1) gemeinsam in der Ebene in einer x, y-Richtung eines kartesischen Koordinatensystems gefügt werden, um eine in der Ebene liegende mehrschichtige Komponente (1) zu erhalten, bevor die Selbstformung (V) während einer Änderung der umgebenden Klimabedingungen durchgeführt wird, was zu einer formveränderten, in der Ebene liegenden mehrschichtigen Komponente (2) führt.

11. Herstellungsverfahren nach einem der Ansprüche 8-10, wobei die formveränderte mehrschichtige Komponente (2) aus anfänglich flach geformten Elementen auf Holzbasis oder flach geformten, aus mehreren Elementen bestehenden laminierten Komponenten auf Holzbasis hergestellt wird, die durch die Selbstformung (V) verformt werden, während sich die umgebenden Klimabedingungen von der Ausgangsklimabedingung (T1, RH1) zur Zielklimabedingung (T2, RH2) ändern.

12. Herstellungsverfahren nach einem der Ansprüche 8-11, wobei im Selbstformungsschritt (V) eine Änderung der relativen Feuchtigkeit zwischen 5 % und 60 % und/oder eine Temperaturänderung zwischen 10°C und 70°C von der Ausgangsklimabedingung zur Zielklimabedingung durchgeführt wird.

## Revendications

1. Procédé de fabrication d'un composant multicouche (1) d'éléments superposés (0, 0'), comprenant :
- l'obtention (I) d'informations de condition climatique cible d'une condition climatique au niveau d'un emplacement cible au niveau d'un site d'un client, les informations de condition climatique cible obtenues comportant des informations sur une humidité relative cible (RH2) et/ou une température cible (T2) au niveau de l'emplacement cible ;
- la sélection (II) d'éléments (0, 0') pour la fabrication du composant multicouche (1) ;
- la soumission (III) des éléments sélectionnés (0, 0') au niveau d'un emplacement initial à une condition climatique initiale avec une humidité relative initiale (RH1) et une température initiale (T1) pour obtenir des éléments sélectionnés (0, 0') ayant une teneur en humidité initiale, l'emplacement initial étant différent de l'emplacement cible et la condition climatique initiale étant différente de la condition climatique cible ; et
- la liaison (IV) des éléments sélectionnés (0, 0') ayant la teneur en humidité initiale pour obtenir le composant multicouche (1),
dans lequel, lors de la sélection des éléments (0, 0'), un ou plusieurs parmi le type, la composition, la teneur en humidité initiale, l'orientation et/ou l'épaisseur des éléments (0, 0') sont sélectionnés sur la base des informations de condition climatique cible obtenues, de sorte que le composant multicouche (1) des éléments liés (0,0'), lorsqu'il est soumis à la condition climatique cible au niveau de l'emplacement cible conduisant à une teneur en humidité cible des éléments liés (0,0') différente de la teneur en humidité initiale, change sa forme en un composant multicouche à changement de forme (2) ayant une forme finale souhaitée et conserve sensiblement sa forme finale souhaitée dans la condition climatique cible.

2. Procédé de fabrication selon la revendication 1, dans lequel le composant multicouche à changement de forme conserve en outre sensiblement sa forme changée dans une condition climatique, qui diffère de la condition climatique cible.

3. Procédé de fabrication selon l'une quelconque des revendications précédentes, dans lequel l'étape de liaison (IV) est effectuée dans le plan ou hors du plan des éléments sélectionnés (0, 0') pour obtenir le composant multicouche (1) qui est soit un composant multicouche dans le plan, soit un composant multicouche hors du plan.

4. Procédé de fabrication selon l'une quelconque des revendications précédentes, dans lequel un ou plusieurs parmi le type, la composition, la teneur en humidité initiale et/ou l'épaisseur des éléments (0, 0') sont sélectionnés sur la base de la température cible (T2) et/ou sur la base de l'humidité relative cible (RH2).

5. Procédé de fabrication selon la revendication 4, dans lequel l'humidité relative cible (RH2) et/ou la température cible (T2) sont mesurées ou estimées pour obtenir les informations de condition climatique cible pour sélectionner un ou plusieurs parmi le type, la composition, la teneur en humidité initiale, l'orientation et/ou l'épaisseur des éléments (0, 0') sur la base de la température cible (T2) et/ou sur la base de l'humidité relative cible (RH2).

6. Procédé de fabrication selon l'une quelconque des revendications 4 ou 5, dans lequel, dans le cas où l'épaisseur des éléments (0, 0') est sélectionnée sur la base de l'humidité relative cible (RH2) et/ou sur la base de la température cible (T2), plus l'humidité relative cible (RH2) est faible et/ou plus la température cible (T2) est élevée, plus les éléments sélectionnés (0, 0') sont épais.

7. Procédé de fabrication selon l'une quelconque des revendications 4 à 6, dans lequel, dans le cas où la teneur en humidité initiale des éléments (0, 0') est sélectionnée sur la base de l'humidité relative cible (RH2) et/ou sur la base de la température cible (T2), plus l'humidité relative cible (RH2) est faible et/ou plus la température cible (T2) est élevée, plus la teneur en humidité initiale des éléments sélectionnés (0, 0') est élevée.

8. Procédé de fabrication selon l'une quelconque des revendications précédentes, comprenant en outre, à la suite de la liaison (IV), l'autoformage (V) du composant multicouche (1) au niveau de l'emplacement cible, dans lequel un changement de stimulus d'entrée sous la forme d'un changement de conditions climatiques ambiantes changeant de la condition climatique initiale avec humidité relative initiale (RH1) et température initiale (T1) au niveau d'un emplacement initial à la condition climatique cible avec humidité relative cible (RH2) et température cible (T2) au niveau de l'emplacement cible, ladite condition climatique cible conduisant à la teneur en humidité cible des éléments liés (0,0'), est réalisé pour obtenir le composant multicouche à changement de forme (2).

9. Procédé de fabrication selon la revendication 8,
dans lequel le stimulus d'entrée sous la forme d'un changement de conditions climatiques ambiantes pendant l'autoformage (V) est appliqué en amenant le composant multicouche (1) avant l'autoformage (V) de l'emplacement initial avec condition climatique initiale (T1, RH1) à l'emplacement cible avec condition climatique cible (T2, RH2).

10. Procédé de fabrication selon l'une quelconque des revendications 8 à 9,
dans lequel au moins deux éléments (0, 0') sont joints pendant la liaison (IV) à une humidité relative initiale (RH1) et une température initiale (T1) ensemble hors du plan dans une direction z d'un système de coordonnées cartésiennes, pour obtenir un composant multicouche hors du plan (1), avant la réalisation de l'autoformage (V) lors d'un changement des conditions climatiques ambiantes, résultant en un composant multicouche hors du plan à changement de forme (2), ou
dans lequel au moins deux éléments (0, 0') sont joints pendant la liaison (IV) à une humidité relative initiale (RH1) et une température initiale (T1) ensemble dans un plan dans une direction x, y d'un système de coordonnées cartésiennes, pour obtenir un composant multicouche dans le plan (1), avant la réalisation de l'autoformage (V) lors du changement de conditions climatiques ambiantes, résultant en un composant multicouche dans le plan à changement de forme (2).

11. Procédé de fabrication selon l'une quelconque des revendications 8 à 10, dans lequel le composant multicouche à changement de forme (2) est fabriqué à partir d'éléments initiaux à base de bois formés à plat ou de composants à base de bois stratifié à plusieurs éléments formés à plat, qui sont déformés par l'autoformage (V) tout en changeant les conditions climatiques ambiantes d'une condition climatique initiale (T1, RH1) à une condition climatique cible (T2, RH2).

12. Procédé de fabrication selon l'une quelconque des revendications 8 à 11, dans lequel, lors de l'étape d'autoformage (V), un changement d'humidité relative entre 5 % et 60 % et/ou un changement de température entre 10 °C et 70 °C entre la condition climatique initiale et la condition climatique cible sont réalisés.
